# EUROPEAN PATENT SPECIFICATION

(11) **EP 1 074 435 B1**
(45) Date of publication and mention of the grant of the patent: **27.10.2004**
(21) Application number: 00306706.3
(22) Date of filing: 07.08.2000
(51) Int. Cl.: B60R 21/20

(54) **Air bag apparatus and steering wheel**
Lenkrad mit Airbaggerät
Volant pourvu d'un sac gonflable

(30) Priority: 06.08.1999 JP 22465599; 13.06.2000 JP 2000177445
(43) Date of publication of application: 07.02.2001
(73) Proprietor: HONDA GIKEN KOGYO KABUSHIKI KAISHA, Minato-ku Tokyo (JP); NIHON PLAST CO., LTD., Fuji-shi Shizouka (JP)
(72) Inventor: Kai, Takeshi, Wako-shi, Saitama (JP); Asai, Marimasa, Fuji-shi, Shizouka (JP); Tonooka, Masami, Fuji-shi, Shizouka (JP); Tokita, Katsushiro, Fuji-shi, Shizouka (JP)
(74) Representative: Brookes Batchellor

(56) References cited:
- EP-A- 0 949 125
- DE-A- 4 016 047
- DE-U- 29 805 210
- US-A- 5 564 739
- PATENT ABSTRACTS OF JAPAN vol. 1998, no. 10, 31 August 1998 (1998-08-31) -& JP 10 119789 A (TOYODA GOSEI CO LTD), 12 May 1998 (1998-05-12)
- PATENT ABSTRACTS OF JAPAN vol. 1999, no. 10, 31 August 1999 (1999-08-31) -& JP 11 144555 A (TOKAI RIKA CO LTD), 28 May 1999 (1999-05-28)

## Description

### BACKGROUND OF THE INVENTION

The present invention relates to an air bag apparatus provided with a switch and a steering wheel featuring such an air bag apparatus.

Such a constitution of an automobile steering wheel has been known in the prior art, for example, a switching device such as a horn switch is incorporated in an air bag apparatus installed on a boss (center pad portion).

As an example of such a constitution, a constitution is known in which a switching device is installed on a boss of a steering wheel body, and the air bag apparatus as a whole is supported elastically to be capable of moving back and forth by means of the switching device. In this constitution, however, since the weight of the air bag apparatus as a whole is supported by a spring installed in the switching device, it is necessary to make the spring stiffer, thus giving rise to a problem of making it difficult to improve the feel of operating the switching device.

With this regard, such a constitution is known as disclosed, for example, in Japanese Laid-open Patent Publication No. 297390 of 1998, of an inflator of the air bag apparatus, a base plate whereon the inflator is mounted and a horn switch base of cylindrical shape which are secured on the steering wheel body side, and a cover body of the air bag apparatus that also serves as a horn button is slidably mounted on the horn switch base. In this constitution, the switching device is installed in a sliding portion between the side wall of the cover body and the horn switch base.

In the constitution disclosed in Japanese Laid-open Patent Publication No. 297390 of 1998, the weight that must be supported by the switching device is reduced and the feeling of operation can be improved, although the air bag apparatus requires a separate horn switch base and the constitution thereof becomes complicated because the switching device is incorporated in the side wall of the cover body. Thus it becomes difficult to reduce the manufacturing cost and to make the air bag apparatus compact, thus it becomes difficult to design the steering wheel with an improved appearance.

The reader may be further enlightened as to the state of the art by reference to each of DE-U-298 05 210 and US-A-5 564 739 identified here in accordance with Rule 27(1)(b) EPC. Claim 1 herein is characterised by reference to DE-U-298 05 210.

### OBJECTS AND SUMMARY OF THE INVENTION

The present invention has been made in view of the points described above, and an object thereof is to provide an air bag apparatus and a steering wheel of such a constitution as to be provided with a switch, as to have a simple constitution, as to be made with a reduced manufacturing cost and to be made small in size.

Accordingly the present invention comprises an air bag apparatus according to claim 1.

In this constitution, when a force is not applied to the front side of the cover body, the cover body is urged by the urging means of the switching device so that the first contact is held at a position away from the second contact. When the lid of the cover body is pressed against the urging force of the urging means, the first contact is forced via the lid to move and make contact with the second contact thereby to close the contact. Since the switching device supports only the cover body, not the entire air bag apparatus, the urging force of the urging means can be reduced and the feeling of operation of the switching device can be improved. Moreover, since the switching device is operated by pressing directly on the lid, the feeling of operation of the switching device can be improved compared to such a constitution wherein the entire air bag and the side wall of the cover body are provided between the pressing portion and the switching device. Also because the switching device is located on the outer peripheral side of the side wall of the cover body, constitution of the cover body and the base body is simplified, the manufacturing cost can be reduced and the apparatus can be reduced in size.

In the air bag apparatus, the height of the surrounding wall of the base body is substantially equal to the total height of the air bag housing portion enclosing the air bag.

In this constitution, the air bag incorporated in the air bag housing portion is protected from the cover body that moves back and forth when the switching device is pressed to operate, by providing the surrounding wall of the base body the height of which is substantially equal to the total height of the air bag housing portion that incorporates the air bag.

The air bag apparatus is provided with a wrapping means, wrapping which covers at least a part of the front side of the air bag enclosed in the air bag housing portion.

In this constitution, the air bag that is incorporated in a folded up condition can be maintained in a desired shape and kept stationary at a desired position, while the air bag incorporated in the air bag housing portion is protected from the cover body that moves back and forth when the switching device is pressed to operate.

In the air bag apparatus, the surrounding wall of the base body is formed integrally with the base portion.

In this constitution, the constitution is simplified to have a reduced number of component parts, so that the assembly operation is also simplified with the manufacturing cost reduced and the apparatus is also smaller in size.

In the air bag apparatus, the engagement portion is provided on one of the surrounding wall and the side wall, and the lock receiving portion engaging with and holding the engagement portion movably within a predetermined range in back and forth directions is provided on the other of the surrounding wall and the side wall.

In this constitution, the constitution is simplified with a reduced number of component parts, so that the assembly operation is also simplified with the manufacturing cost being reduced and the apparatus is also smaller in size.

In the air bag apparatus, the lock receiving portion guides the engagement portion freely in such a direction as the contacts make contact with and depart from each other in a range of movement caused by normal operation of the switching device.

In this constitution, the feeling of operation of the switching device can be improved since contact between the cover body and the base body is restricted and the distance between the contacts is regulated by the switching device only during operation of the switching device.

In the air bag apparatus, the base body is made by forming the base portion, the surrounding wall that is formed to protrude in a closed or substantially closed shape on the front side surrounding the base portion and the support portion that is provided on the outer peripheral portion of the surrounding wall to oppose the back surface of the lid and supports the second contact, all together by molding a single body using a die.

In this constitution, the base body of a complicated structure can be molded integrally in a predetermined die, wall thicknesses required for any position can be arbitrary set, thereby rationalizing and optimizing the structure, thus making it possible to achieve a proper strength while reducing the total weight. Moreover, the base body can be formed integrally in a single process, thus making it unnecessary to construct the base body from a number of separate parts, thereby realizing a structure having fewer or no joints, resulting in a simplified process of manufacturing the base body and reduced manufacturing cost. Also it becomes possible to use a material that is highly workable in a plastic state, without any tedious joining processes.

In the air bag apparatus, the switching device has a bracket that holds the first contact and supports at least the outer peripheral side of the side wall.

In this constitution, since at least the outer peripheral side of the side wall is supported by the bracket that holds the first contact, the side wall of the cover body can be restricted from deforming without making the construction complicated. Since the bracket is located on the outer peripheral side of the surrounding wall and the side wall, the operations of assembly and inspection are made easier.

The steering wheel of the present invention comprises the steering wheel body serving as a member to be mounted consisting of the boss mounted on the steering shaft, the wheel for operation and the spokes that connect the boss and the wheel, and the air bag apparatus provided with the switching device installed on the spoke.

In this constitution, since the air bag apparatus is provided having the switching device with a good feeling when operated that is located on the spoke, the air bag apparatus can be smaller in size and a steering wheel of an improved appearance can be provided.

### BRIEF DESCRIPTION OF THE DRAWINGS

Fig. 1 is a sectional view showing a steering wheel provided with the air bag apparatus of the present invention.

Fig. 2 is a sectional view along line A-A in Fig. 1 of the steering wheel of an embodiment of the present invention,

Fig. 3 is a sectional view along line B-B in Fig. 1 of the steering wheel of the embodiment,

Fig. 4 is a perspective view of the air bag apparatus of the embodiment,

Fig. 5 is a perspective view of the air bag apparatus of the embodiment viewed from behind the bracket,

Fig. 6 is a sectional view corresponding to that along line A-A in Fig. 1 showing another embodiment of the steering wheel provided with the air bag apparatus of the present invention.

### DETAILED DESCRIPTION OF THE PREFERRED EMBODYMENTS

Now an embodiment of the air bag apparatus and the steering wheel of the present invention will be described below with reference to the accompanying drawings.

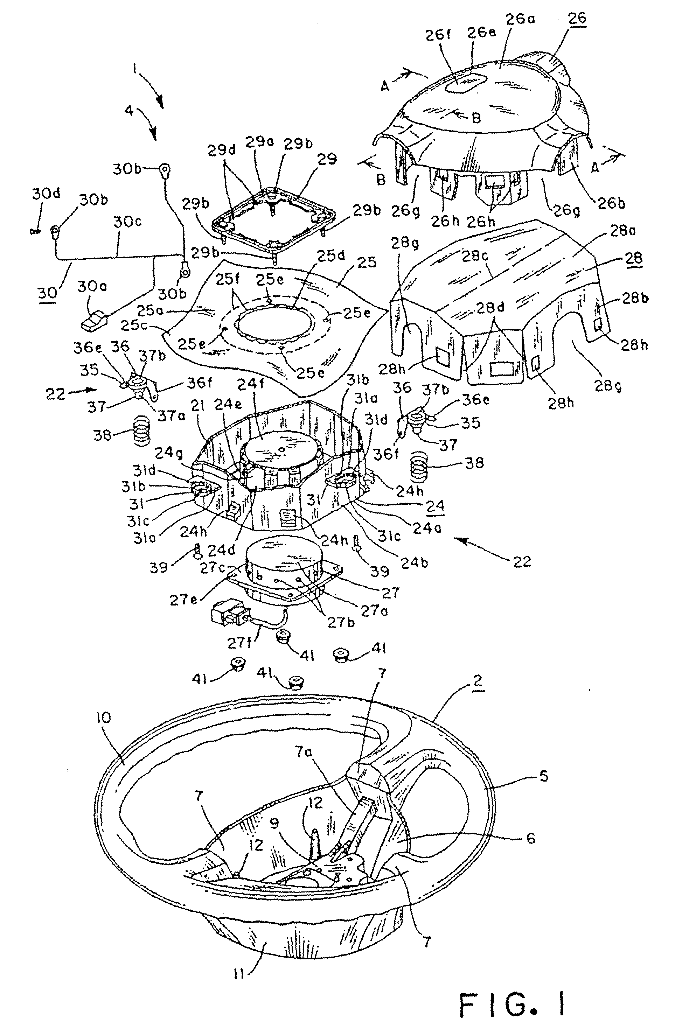

In Fig. 1 through Fig. 3, reference numeral 1 denotes an automobile steering wheel, the steering wheel 1 comprising a steering wheel body 2 that serves as a member to be mounted, an air bag apparatus (air bag module) 4 attached on the passenger side of the steering wheel body 2 and other components. While the steering wheel 1 is normally used in the state of being inclined at a predetermined angle, a front side of the air bag apparatus 4, namely a passenger side thereof, will be referred to as an upper side and a back side of the air bag apparatus 4, namely a vehicle body side thereof, will be referred to as a lower side.

The steering wheel body 2 is constituted from a rim 5 that serves as a wheel having a annular ring shape and is also called a ring portion or grip, a boss section 6 located inside of the rim 5, and a plurality of, three in the embodiment of the invention, spokes 7 that connect the rim 5 and the boss section 6. Provided below the boss section 6 is a boss 8 that has a substantially cylindrical shape and is fitted on a steering shaft (not illustrated), while the boss 8 has a boss plate 9, having such a shape as a plate or the like, adhered thereon by welding or another method or formed integrally therewith. A core metal 7a of the spoke 7 extends from the boss plate 9 being adhered thereon by welding or another method or formed integrally therewith. Further a core metal 5a of the rim 5 is formed on the core metal 7a of the spoke 7 being adhered thereon by welding or another method or formed integrally therewith. Formed on the outer peripheral portion of the core metal 5a of the rim 5 and on the outer peripheral portion of the rim 5 side part of the core metal 7a of the spoke 7 are soft skins 10 made of a synthetic resin or the like. In this embodiment, the boss plate 9 and the core metals 5a, 7a are formed integrally by die casting of a magnesium alloy, while being covered by the skin 10 that is formed integrally from polyurethane foam.

Attached to the boss plate 9 is a lower cover (back cover) 11 made of a resin such as polypropylene fastened by means of screws or the like, to thereby cover the lower side of the boss section 6. The lower cover 11 has an opening 11 a formed at the center thereof, to pass the boss 8 or the steering shaft therethrough. Further attached on the inside or at the lower side of the lower cover 11 is an electrical connection device for electrically connecting the vehicle body side and the steering wheel 1 side.

A support boss 12 that is positioned on the under surface of the airbag apparatus 4 while making contact therewith is provided integrally to protrude upward from the boss plate 9. An air bag apparatus mounting portion that holds and fixes the air bag apparatus 4 is provided integrally or separately on the boss plate 9 or the core metal 7a of the spoke 7.

The air bag apparatus 4, also called the air bag module, has an air bag apparatus body 21 as shown in Fig. 1 through Fig. 4, and is also provided with horn switch devices 22 at a plurality of positions, three in the embodiment of the invention, on the outer peripheral side of the air bag apparatus body 21 integrally therewith.

The air bag apparatus body 21 is constituted from a base plate 24 serving as a base body, a bag-shaped air bag 25, a cover body 26 made of a resin that covers the air bag 25, an inflator (gas generator) 27 that discharges a gas, a wrapping 28 that covers the air bag 25 inside of the cover body 26, a retainer (retainer ring) 29 that secures the air bag 25 and the inflator 27 onto the base plate 24, an electrical terminal connection device 30 and other components.

The base plate 24 comprises a base portion 24a (substrate portion) that has a substantially polygonal shape and is formed integrally in the shape of a box opening at the top without a lid. by molding by die casting of, for example, a magnesium alloy, a surrounding wall 24b having the shape of a polygonal tube protruding upward from the peripheral portion of the substrate portion 24a on substantially the entire circumference thereof, and other components. The substrate portion 24a has a bulging portion 24c formed at the center thereof to rise upward, and a communicating hole 24d for inflator 27 formed in a circular hole at the center of the bulging portion 24c, while bolt inserting holes (not illustrated) are formed at a plurality of positions, four in the embodiment of the invention, on the outer periphery of the communicating hole 24d for inflator 27. Formed to surround the communicating hole 24d for inflator 27 is a swelling portion 24f having a cup shape with a plurality of pillars 24e to form spaces between the pillars 24e as gas passages 24g.

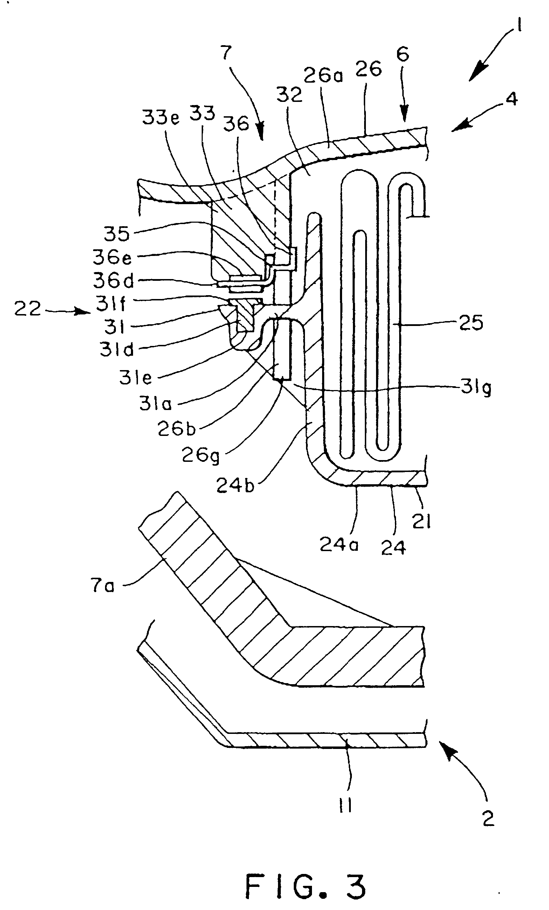

The inner surface of the surrounding wall 24b is made smooth without protrusions to house the air bag. Provided on the outer surface of the surrounding wall 24b are hooks 24h formed integrally at predetermined intervals with tips thereof being directed downward, and shelf-like fixed contact support portions 31 serving as a support constituting the horn switch device 22 are formed integrally at a plurality of positions, three protruding on the spoke 7 in the embodiment of the invention. Each of the fixed contact support portions 31 has a support plate 31a formed in the horizontal plate shape protruding from the surrounding wall 24b, an annular portion 31b provided on the distal end side of the support plate 31a, a communicating hole 31c formed at the center of the annular portion 31b, and a fixed contact 31d serving as the second contact fastened on the support plate 31a on one side of the annular portion 31b integrally or separately. In the embodiment of the invention, the fixed contact 31d is made by inserting a rivet 31f made of brass into a recess 31e with pressure from above as shown in Fig. 3. Each of the fixed contact support portions 31 further has a support rib 31g integrally formed therewith for supporting the support plate 31a by connecting the back surface of the support plate 31a and the outer surface of the surrounding wall 24b.

While the air bag 25 is shown by drawing only the mounting portion 25a at the middle of the bottom thereof in Fig. 1, the air bag 25 is formed in a bag shape by superposing two circular base fabrics and sewing along the outer periphery thereof or otherwise joining them. Formed at the center of the bottom, namely at the center of the lower base fabric 25c, is a communicating hole for inflator 25d in the shape of circular hole where the inflator 27 and the swelling portion 24f of the base plate 24 are passed through, and four bolt holes 25e are formed along the outer periphery of the communicating hole for inflator. Furthermore, a disk-shaped reinforcement fabric (not illustrated) is placed around the communicating hole for inflator 25d and is concentrically sewn with triple stitches 25f thereby increasing the strength.

The cover body 26 is also called the air bag cover and is formed integrally from a synthetic resin, for example, by injection molding of an elastomer (TPO), and has a covering portion 26a that appears as the center pad of the steering wheel 1 by covering the boss 6 and a part of the spoke 7 of the steering wheel body 2, and the side wall 26b having the shape of a rectangular tube protruding from the back surface of the covering portion26a downward. A portion surrounded by the side wall 26b, the covering portion 26a and the base plate 24 that is attached to the under side of the cover body 26 becomes the air bag housing portion 32 that houses the folded air bag 25. Formed on the back surface of the covering portion 26a while facing the air bag housing portion 32 is a tear line 26d that is a weak portion having a thin thickness formed substantially in the shape of a letter H where rupture takes place first, on the back surface of the covering portion 26a. Also formed on the front surface of the covering portion 26a is a recess 26e, and a name plate 26f made by wrapping a substrate made of nylon with an aluminum plate whereon printing is applied, is secured in the recess 26e.

Formed on the side wall 26b of the cover body 26 are notches 26g that are directed toward spokes 7 and communicate with the bottom end, and lock receiving portions 26h that are rectangular communication holes are formed at predetermined intervals between the notches 26g.

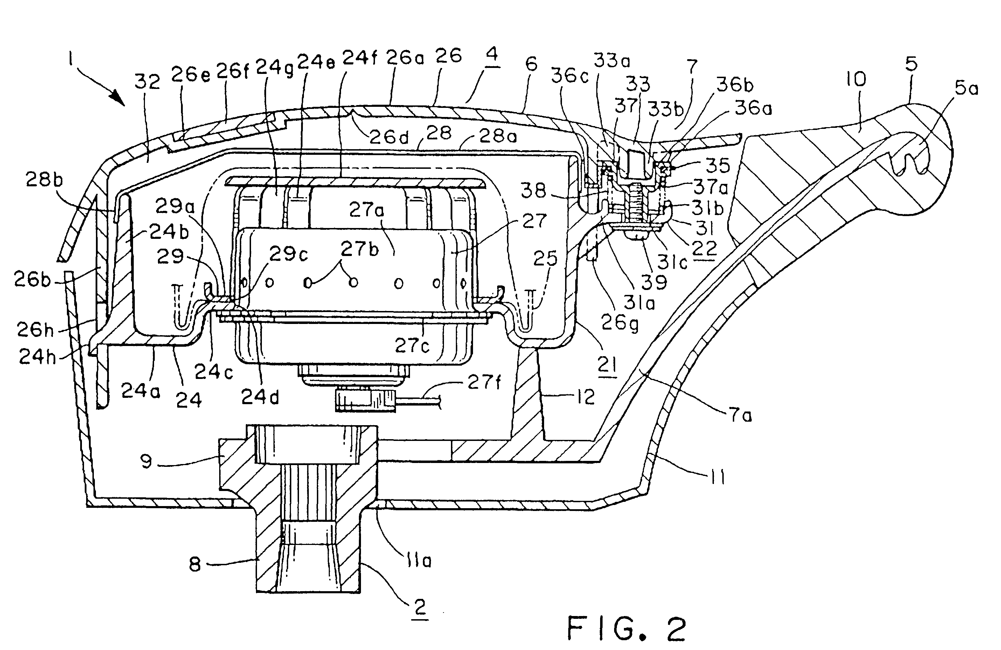

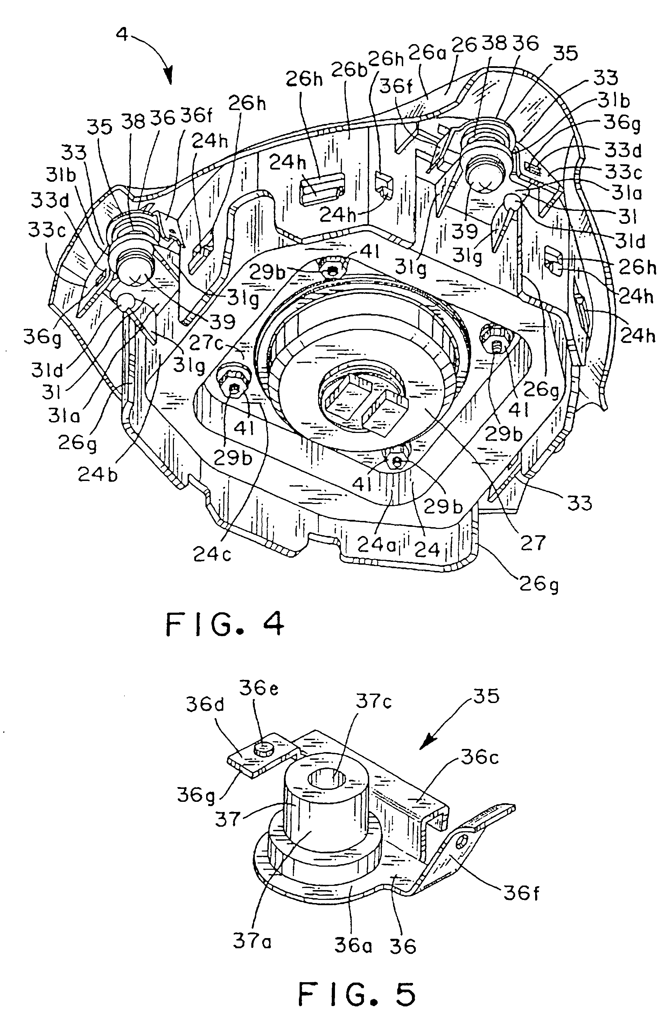

Further provided on the back surface of the covering portion 26a of the cover body 26 is a movable contact support portion 33, that constitutes the horn switch device 22, being located at the spoke 7 on the outer peripheral side of the side wall 26b. The movable contact support portion 33 comprises a cylindrical boss 33b reinforced by ribs 33a as shown in Fig. 2, a locking rib 33c which regards a longitudinal direction in the direction crossing the longitudinal direction of the spoke 7 as shown in Fig. 4, a locking hole 33d penetrating the locking rib 33c along the longitudinal direction of the spoke 7, and a movable contact support portion 33e as shown in Fig 3 are formed, and a bracket 35 is attached to each of the movable contact support portions 33.

The air bag housing portion 32 is made in such a configuration so that the surrounding wall 24b of the base plate 24 is substantially equal to the total height of the side wall and the air bag 25 folded and housed in the air bag housing portion 32, does not touch the side wall 26b of the cover body 26.

Each bracket 35 is made by outsert molding (integrated in-mold) of an insulator portion 37 made of an insulating resin such as 6-6 nylon integrally formed on a plate 36 made of steel, while the plate 36 has a plate base portion 36a having a substantially flat plate configuration, a hole 36b shown in Fig. 2 formed in the plate base portion 36a, a hook 36c formed by bending to have a cross section of substantially the shape of a letter C on one side of the plate base portion 36a, a step 36d provided to extend at a position a little lower than the plate base portion 36a, a movable contact 36e serving as the first contact that is fixed integrally or separately on the step 36d, a terminal mounting portion 36f provided to extend from the plate base portion 36a inclining downward, and an insertion piece 36g provided to extend from the step 36d. The insulator portion 37 has a spring receiving portion 37a having a cylindrical shape, a positioning portion 37b provided in a shape of a recess covering the hole 36b at an upper portion of the inside of the spring receiving 37a and a mounting receiving portion 37c provided at a lower portion of the inside of the spring receiving portion 37a formed therein.

Mounted on the spring receiving portion 37a is the upper end of a coil spring 38 that functions as urging means which has elasticity and is a spring fitted therein, and a screw 39 that constitutes a support shaft serving as a mounting means is screwed into the mounting receiving portion 37c.

The terminal connection device 30 has a connector 30a, three ring-shaped crimp terminals 30b and lead wires 30c that connect the connector 30a and the crimp terminals 30b. Each of the crimp terminals 30b is connected electrically and mechanically to the terminal mounting portion 36f of the bracket 35 by a screw 30d or the like, while the connector 30a is connected electrically and mechanically to a connecting device that electrically connects the vehicle side and the steering wheel 1 side.

The inflator 27 has a substantially cylindrical inflator body (container) 27a filled with a propellant or the like inside thereof, while gas jet ports 27b are formed on the upper side portion of the inflator body 27a at predetermined intervals around the circumference. Formed on the outer peripheral side to protrude from a substantially middle portion in the direction of height of the inflator body 27a is a flange 27c with four bolt holes 27e formed in the flange 27c. Lead wires 27f and the like are lead through the bottom of the inflator body 27a to the outside, thereby supplying drive electric power. A protector formed integrally from a synthetic resin may also be fitted in the bottom of the inflator body 27a.

The wrapping 28 is for the purpose of covering the folded air bag 25 and holding the folded configuration thereof, and is formed in the shape of bottomless box made of a nylon base fabric similar to the air bag 25, or paper impregnated with a resin, for example, Tyvek (product name). The wrapping 28 has a front portion 28a that covers the front side of the folded air bag 25 and the surrounding wall 28b, while a rupture line 28c consisting of intermittent perforations is formed in the front portion 28a. The surrounding wall 28b is formed discontinuously with slits 28d, while notches 28g that are directed toward the spokes 7 and communicate with the bottom end, similar to the side wall 26b of the cover body 26 are formed, and lock receiving portions 28h that are rectangular communicating holes are formed at predetermined intervals between the notches 28g.

The retainer 29 has a retainer body 29a made of a metal in a rectangular shape on the outside and substantially circular inside, and the retainer body 29a has a plurality of communicating holes (not illustrated) and a set bolt (stud bolt) 29b fixed thereto. That is, the communicating holes 29c on the inner circumference of the retainer body 29a have substantially the same shape as the communicating hole for inflator 24d of the base plate 24, while notches 29d corresponding to the plurality of pillars 24e are formed and the set bolts 29b are formed by aligning with the bolt holes made in the base plate 24 or the like.

Now the process of assembling the air bag apparatus 4 will be described below.

First, the retainer 29 is inserted through the communicating hole for inflator 25d into the air bag 25, and the set bolts 29b of the retainer 29 are inserted into the bolt holes 25e of the air bag 25 thereby to be exposed to the outside. The air bag 25 and the retainer 29 are folded up by means of an air bag folder. That is, the air bag 25 is positioned between two opposing tables and fastened onto one of the tables, for example the upper table, and the distance between the two tables is kept nearly equal to the height of the surrounding wall 24b of the base plate 24. In this condition, a plurality of, for example, four vertical holding plates are moved to slide from the entire periphery of the air bag 25 from the outer peripheral direction toward the center, thereby to gather the air bag 25 into a wavy shape within a range of thicknesses regulated by the two tables, thus folding up the air bag 25. In the condition where the air bag is fixed on the circumference by the holding plates, the upper table is removed and the base plate 24 with the substrate portion 24a facing upward is placed from the above, thereby to house the air bag 25 in the base plate 24. Then the wrapping 28 is applied so that the communicating holes 28h are caught by the hooks 24h, thereby preventing the air bag 25 from deforming and expanding by the self-restoring force. The wrapping 28 may also be fastened onto the surrounding wall 24b of the base plate 24 by means of a double-sided adhesive tape or the like.

The bracket 35 locks hook 36c onto the edge of the notch 26g of the side wall 26b of the cover body 26, while inserting the insertion piece 36g into the locking hole 33d of the movable contact support portion 33 of the cover body 26 in the direction toward the outer peripheral side, namely toward the rim 5, to lock therein thereby being assembled in the movable contact support portion 33 of the cover body 26. The cover body 26 made of a soft resin can be easily deformed and assembled with the bracket 35, when the inside of the side wall 26b is empty. Under this condition, the boss 33b is inserted in the positioning portion 37b of the bracket 35 and is thereby positioned.

In such a condition wherein one end of the coil spring 38 is fitted in the spring receiving portion 37a of the bracket 35, the cover body 26 is applied to cover the base plate 24 that houses the air bag 25, and the hook 24h of the base plate 24 is hooked onto the lock receiving portion 26h of the cover body 26, thereby assembling the side wall 26b and the surrounding wall 24b in a socket and spigot joint configuration.

Further in this condition, the other end of the coil spring 38 is supported by the annular portion 31b of the fixed contact support portion of the base pate 24, and the screw 39 is inserted through the communicating hole 31c of the fixed contact support portion 31 and screwed into the mounting receiving portion 37c of the bracket 35. Then such a condition wherein the movable contact 36e of the bracket 35 and the fixed contact 31d of the base plate 24 oppose each other, and are insulated from each other with a space of a predetermined distance by the urging force of the coil spring 38.

With the cover body 26 combined with the base plate 24, upper side portion of the inflator body 27a is inserted into the swelling portion 24f and, at the same time, the set bolts 29b of the retainer 29 that protrudes from the bolt hole of the base plate 24 is inserted into the bolt hole of the inflator 27. And nuts 41 are screwed from the tips of the set bolts 29b and tightened, so that the air bag 25 and the base plate 24 are interposed and fastened between the flange 27c of the inflator 27 and the retainer body 29a of the retainer 29.

Furthermore, the crimp terminals 30b of the terminal connection device 30 are connected to the terminal mounting portion 36f of the bracket 35 by means of screws 30d or the like, thereby completing the air bag apparatus 4 that has the horn switch device 22.

The air bag apparatus 4 is incorporated in the steering wheel body 2 by fastening the base plate 24 onto the boss plate 9 by means of screws or other means (not illustrated). In this condition, the movable contact 36e is connected via the connector 30a of the terminal connection device 30 to the connecting device that electrically connects between the vehicle body side and the steering wheel 1 side and is, through this connection device, connected to a positive circuit of the horn device on the vehicle body side (not illustrated). The fixed contact 31d is connected to the vehicle body (ground) via, for example, the base plate 24, the boss 8 and the steering shaft.

In the air bag apparatus 4 of the steering wheel 1 that is assembled as described above, when the vehicle experiences a collision or the like, an inert gas such as nitrogen is quickly discharged by the inflator 27 into the air bag 25, thereby causing the air bag 25 that has been folded and contained to expand quickly. The pressure of expansion of the air bag 25 tears off the wrapping 28 along the rupture line 28c, while the cover body 26 tears off along the tear line 26d to open like doors and make an ejection aperture for the air bag 25. The air bag 25 is deployed through this ejection aperture and expands in front of the passenger, thereby protecting the passenger from the impact of collision.

When no force is applied to the cover body 26 of the air bag apparatus 4, the horn switch 22 pushes up each bracket 35, that is, the cover body 26 by the urging force of respective coil spring 38 to the upper limit and held thereon. When the cover body 26 of the air bag 4 is pressed against the urging force of the coil spring 38, on the other hand, the cover body 26 is guided by the engagement portion between the lock receiving portion 26h of the cover body 26 and the hook 24h of the base plate 24 to descend, so that the movable contact 36e makes contact with the fixed contact 31d to close the circuit thereby sounding the horn.

According to this embodiment, with respect to the steering wheel equipped with the air bag apparatus mounted on a vehicle such as automobile, and particularly with respect to the steering wheel equipped with the air bag apparatus having the switch (horn switch) that presses the portion of the air bag apparatus 4 and starts the horn and the like, since only the cover body 26 is moved back and forth, instead of moving the entire air bag apparatus 4, the urging force of the coil spring 38 serving as the urging means can be reduced, thereby making it possible to improve the feeling of operation of the horn switch device 22 easily.

Also because the horn switch device 22 is installed on the side wall 26b and the outer peripheral side of the surrounding wall 24b while effectively utilizing the space of the spoke 7 of the air bag housing portion 32, instead of mounting at the lower portion of the air bag apparatus body 21 or on the fitting portion of the side wall 26b and the surrounding wall 24b, the air bag apparatus 4 can be smaller in size and the appearance of the steering wheel 1 can be easily improved. For example, the steering wheel 1 as a whole can look compact and. neat, while making it easier to steer and to turn on the switches for the horn.

Moreover, since the movable contact 36e of the horn switch device 22 is located on the back surface of the covering portion 26a of the cover body 26 and is directly moved, the member that is required to be present between the operating portion and the switch portion can be minimized, and the feeling of operation can be easily improved Also it is not necessary to make the resin that makes the cover body 26 too rigid, and a flexible material suitable for the expansion of the air bag 25 can be used thereby making it possible to adjust the expansion characteristics of the air bag 25 easily.

Also because the cover body 26 is guided by the engagement portion between the lock receiving portion 26h of the cover body 26 and the hook 24h of the base plate 24 to move back and forth within a predetermined range, the constitution can be simplified and manufactured easily through a simple assembly process.

The bracket 35 that supports the movable contact 36e locks the hook 36c on the edge of the notch 26g of the side wall 26b of the cover body 26, thereby holding the cover body 26 on the air bag apparatus 4 when the air bag 25 expands, and restricting deformation of the cover body 26. Accordingly, engagement between the lock receiving portion 26h of the cover body 26 and the hook 24h of the base plate 24 can be maintained firmly. Moreover, since the bracket 35 is located outside the base plate 24 and the cover body 26 that are assembled in a socket and spigot joint configuration, the operations of assembly and in-process inspection can be easily done.

Also because the surrounding wall 24b of the base plate 24 is formed so as to substantially constitute the total height of the air bag housing portion 32 wherein the air bag 25 is folded and housed, the air bag 25 can be easily protected by preventing the cover body 26 that moves back and forth when the horn switch device 22 is pressed to operate and the air bag 25 housed in the air bag housing portion 32 from rubbing each other.

Also because the base plate 24 is formed integrally by die casting of magnesium alloy, the manufacturing cost can be reduced. Namely, the base plate 24 is integrally molded that comprises the substrate portion 24a, the surrounding wall 24b having a closed shape surrounding the substrate portion 24a, and the fixed contact support portion 31 that supports the fixed contact 31d located on the outer periphery of the surrounding wall 24b. As the base plate 24 having a complicated structure can be molded integrally with the predetermined die and the desired wall thickness can be set for any portion, thereby rationalizing and optimizing the structure, thus making it possible to achieve a proper strength while reducing the total weight. Moreover, since the entire body can be formed integrally in a single process, namely can be made in one-shot molding, it is unnecessary to constitute the base plate 24 from a number of separate parts, thereby realizing a structure having fewer or no joints, resulting in a simplified process of manufacturing the base plate 24 and reduced manufacturing cost. Also it becomes possible to use a material that is highly workable in a plastic state, without any tedious joining processes.

The molding method and the material (grade) to be molded are not limited to those described above. In die casting, for example, AM6O or more preferably AM5O magnesium alloy that is more ductile is used but an aluminum alloy such as ADC7 or iron may also be used. In injection molding, thermoplastic resins such as 6-6 nylon, 6 nylon, polyphenylene sulfide (PPS), polysulfone, or these thermoplastic resins reinforced with glass fibers, and thermosetting resins such as phenol resin and unsaturated polyester resin (BMC) may be used.

Moreover, because the wrapping 28 is provided that covers the front side of the air bag 25 that is folded and housed in the air bag housing portion 32, the air bag 25 that is folded and housed can be maintained in the desired shape at the desired position, and the air bag 25 can be easily protected by preventing the cover body 26 that moves back and forth when the horn switch device 22 is pressed to operate and the air bag 25 housed in the air bag housing portion 32 from rubbing each other.

Furthermore, since the side wall 26b of the cover body 26 protrudes downwardly from a back side of the covering portion 26a along the surrounding wall 24b of the base body, the cover body 26 fitted at the surrounding wall 24b can be moved back and forth smoothly whereby making it possible to improve the feeling of operation of the horn switch device 22. Preferably, the side wall 26b of the cover body 26 has an at least partially closed shape whereby not only the cover body 26 can be moved back and forth smoothly and the feeling of operation of the horn switch device 22 can be improved but also the cover body 26 is strengthened.

Although the fixed contact 31d and the fixed contact support portion 31 whereon the fixed contact 31d is mounted are installed on the base plate 24 in the embodiment described above, it may also be supported on the steering wheel body 2 side, for example, on the core metal 7a of the spoke 7.

In the embodiment described above, movement of the cover body 26 is guided in the predetermined vertical direction by the engagement of the lock receiving portion 26h and the hook 24h, in such a condition that the hook 24h of the base plate 24 is hooked onto the lock receiving portion 26h of the cover body 26 and locked. However, one or both of the upward and downward movements when the horn switch device 22 is pressed to operate normally may also be regulated by the engagement of the lock receiving portion 26h and the hook 24h. Alternatively, the distance between the contacts 31d and 31e may also be regulated by means of the horn switch device 22 only by inserting the hook 24h playably in the lock receiving portion 26h thus making the lock receiving portion a playable insertion portion with regard to the vertical movement, thereby eliminating the hitching between the cover body 26 and the base plate 24 when the horn switch device 22 is pressed to operate, thereby making it possible to improve the feeling of operation of the horn switch device 22.

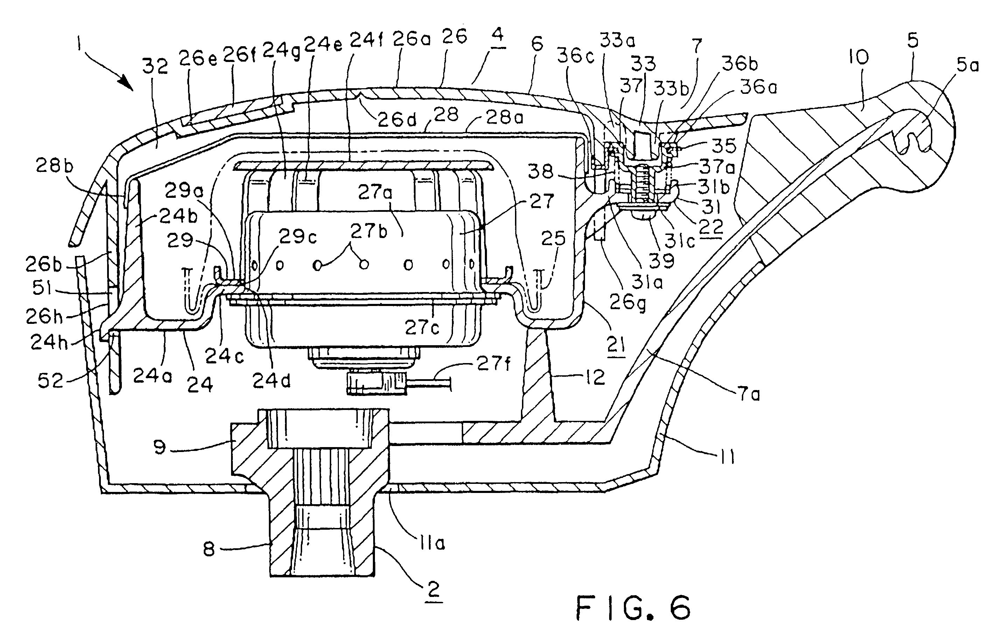

Fig. 6 is a sectional view showing another embodiment of the air bag apparatus and the steering wheel of the present invention. Components parts substantially the same as those of the embodiment shown in Fig. 1 and the related drawings will be denoted with identical reference numerals and duplicate description thereof will be omitted.

In this constitution, the hook 24h is inserted playably in the lock receiving portion 26h When an operating force is not applied to the cover body 26 that serves as the operating portion, namely when the contact is opened by the urging force of the coil spring 38 of the horn switch device 22 so that the cover body 26 is positioned at the upper limit, clearance 51 is provided between the upper portion of the hook 24h and the lock receiving portion 26h, while at the same time clearance 52 is secured between the lower portion of the hook 24h and the lock receiving portion 26h. When the cover body 26 is pressed to operate, the hook 24h moves in the lock receiving portion 26h in such a direction that reduces the clearance 51, although both clearances 51, 52 are maintained during normal pressing operation, so that the upper and lower portions of the hook 24h do not make contact with the lock receiving portion 26h.

In such a constitution that does not have the lower clearance 52 when an operating force is not applied to the cover body 26 that serves as the operating portion, a pressure is generated between the contact surfaces of the lock receiving portion 26h and the hook 24h by the urging force of the coil spring 38, and deformation is generated in the structure between the horn switch device 22 and the departed hook 24h. As a consequence, it becomes necessary to cancel the pressure between the contact surfaces when the cover body 26 is pressed downward, and move the horn switch device 22 to close the contact. When the motion of pressing down the cover body 26 is stopped, the cover body 26 is pressed back upward by the urging force of the coil spring 38, while the lock receiving portion 26h and the hook 24h make contact with each other before the horn switch device 22 reaches the open end. The movement of the lock receiving portion 26h and the hook 24h making contact with each other has a subtle effect on the feeling of operation.

When the clearance 52 is secured between the hook 24h and the lock receiving portion 26h, on the other hand, the feeling of operation is determined by only the horn switch device 22, thereby providing a satisfactory feeling of crisp and straightforward operation.

When the air bag 25 is expanded, a force far greater than that of operating the horn is exerted to the cover body 26. At this time, the clearance 52 between the hook 24h and the lock receiving portion 26h is squeezed beyond the range of the normal operation. Moreover, the lower end or the upper end of the hook 24h makes contact with the lock receiving portion 26h, so that the cover body 26 is firmly supported and the air bag 25 can be expanded smoothly.

In respective embodiments described above, the lock receiving portion in the form of a hole may also be formed in the base plate with a hook formed on the cover body to protrude therefrom, besides the hook 24h provided to protrude from the base plate 24 and the lock receiving portion 26h provided on a dent in the cover body 26.
Alternatively, the lock receiving portion and the hook may also be formed on both the base plate and the cover body.

According to the present invention, when the lid of the cover body is pressed against the urging force of the urging means, the first contact is forced via the lid to move and make contact with the second contact, thereby closing the contact. Since the switching device supports only the cover body, and not the entire air bag apparatus, the urging force of the urging means can be reduced and the feeling of operation of the switching device can be improved. Moreover, since the switching device is operated by pressing directly with the lid, the feeling of operation of the switching device can be improved compared to such a constitution where the entire air bag and the side wall of the cover body are provided between the pressing portion and the switching device. Also because the switching device is located on the outer peripheral side of the side wall of the cover body, construction of the cover body and the base body can be simplified and the manufacturing cost can be reduced and the apparatus can be smaller in size.

Since the surrounding wall of the base body is provided such that the height substantially equal to the height of the air bag housing portion enclosing the air bag, the air bag incorporated in the air bag housing portion is protected from the cover body that moves back and forth when the switching device is pressed to operate.

The wrapping means wrapping at least a part of the front side of the air bag enclosed in the air bag housing portion is provided, the air bag that is incorporated while being folded up can be maintained in a desired shape and kept stationary at a desired position, while the air bag incorporated in the air bag housing portion can be protected from the cover body that moves back and forth when the switching device is pressed to operate.

Since the surrounding wall of the base body is formed integrally with the base, its constitution is simplified with a reduced number of component parts, so that the assembly operation is also simplified with the manufacturing cost reduced and the apparatus is also smaller in size.

Since the engagement portion is provided on one of the surrounding wall and the side wall, and the lock receiving portion engaging with and holding the engagement portion movably within a predetermined range in back and forth direction is provided on the other of the surrounding wall and the side wall, its constitution is simplified with a reduced number of component parts, so that the assembly operation is also simplified with the manufacturing cost reduced and the apparatus is also smaller in size.

Since the lock receiving portion guides the engagement portion freely in such a direction that the contacts touch with and depart from each other in a range of movement caused by normal operation of the switching device, the feeling of operation of the switching device can be improved by restricting the contact between the cover and the base body and regulating the distance between the contacts by means of the switching device only during operation of the switching device.

Since the base body is made by forming the base portion, the surrounding wall that is formed to protrude in a closed or substantially closed shape on the front side surrounding the base portion and the support portion that is provided on the outer peripheral portion of the surrounding wall to oppose the back surface of the lid and supports the second contact, together in a single body using a die, the base body of a complicated structure can be molded integrally in a predetermined die, wall thicknesses required for any region can be arbitrary set, thereby rationalizing and optimizing the structure, thus making it possible to achieve a proper strength while reducing the total weight. Moreover, the base body can be formed integrally in a single process thus making it unnecessary to construct the base body from a number of separate parts, thereby realizing a structure having fewer or no joints, resulting in a simplified process of manufacturing the base body and reduced manufacturing cost. Also it is made possible to use a material that is highly workable in a plastic state, without any tedious joining processes.

Since the bracket that supports the first contact and supports at least the outer peripheral side of the side wall is provided, the side wall of the cover body can be restricted from deforming without making its constitution complex. Since the bracket is located on the outer peripheral side of the surrounding wall and the side wall, operations of assembly and inspection are made easier.

With the switching device having a good feeling of operation installed on the spoke, the air bag apparatus is down-sized, it is possible to improve the appearance of the air bag apparatus on the steering wheel.

## Claims

1. An air bag apparatus comprising:
an air bag (25);
an inflator (27) supplying a gas to said air bag (25);
a base body (24) having a base portion (24a), said base portion (24a) mounting said air bag (25) and said inflator (27), said base portion (24a) being attached to a mounting member, the base body (24) further having a peripheral wall portion (24b) having at least partially a closed shape and protruding along a periphery of the base portion (24a) toward a front section;
a cover body (26) having a lid portion (26a) covering a front side of the peripheral wall portion (24b) of the base body (24) and having a side wall (26b) protruding downwardly from a back side of said lid portion (26a) along said peripheral wall portion (24b) of said base body (24)
a switching device (22) located on the outer peripheral side of said side wall (26b) of said cover body (26), the switching device (22) comprises an urging means (38) for urging said cover body (26) toward the front side, a first contact (36e) supported on the back side of said lid portion (26a), a second contact (31d) opposing the first contact (36e) and being supported by one of said base body (24) or said mounting member,
**characterised in that** there is provided an engagement portion (24h) on one of the surrounding wall (24b) of the base body (24) and the side wall (26b) of the cover body (26b), and a lock receiving portion (26h) engaging with and holding said engagement portion (24h) movably within a predetermined range in back and forth directions is provided on the other of the surrounding wall (24b) of the base body (24) and the side wall (26b) of the cover body (26), and **in that**
the lock receiving portion (26h) guides the engagement portion (24h) freely in such a direction as the contacts (36e, 31d) make contact with and depart from each other in a range of movement caused by an operation of the switching device (22).

2. An air bag apparatus according to claim 1 wherein: said side wall (26b) of said cover body (26) has an at least partially closed shape.

3. An air bag apparatus according to claim 1 or claim 2 wherein: the height of the surrounding wall (24b) of the base body (24) is substantially equal to the height of an air bag housing portion (21) enclosing the air bag (25).

4. An air bag apparatus according to any preceding claim further comprising:
a wrapping means (28) wrapping at least a part of the front side of the air bag (25) enclosed in the air bag housing portion (21).

5. An air bag apparatus according to any preceding claim wherein: the surrounding wall (24b) of the base body (24) is formed integrally with the base portion (24a).

6. An air bag apparatus according to Claim 5 wherein: the base body (24) is made by forming the base portion (24a), the surrounding wall (24b) is formed to protrude in a closed or substantially closed shape on the front side surrounding the base portion (24a) and the support portion that is provided on the outer peripheral portion of the surrounding wall (24b) to oppose the back surface of the lid portion (26a) and support the second contact (31d) all together in a single body using a die.

7. An air bag apparatus according to any preceding claim wherein: the switching device (22) has a bracket (35) that holds the first contact (36e) and supports at least the outer peripheral side of the side wall (26b) of the cover body (26).

8. An air bag apparatus according to any of the previous claims in combination with a steering wheel for an automobile, comprising:
a boss (6), which is supported on a steering shaft;
a rim (5), and
a spoke (7), which joins the boss (6) and the rim (5).

## Patentansprüche

1. Airbaggerät, umfassend:
einen Airbag (25);
eine Aufblasvorrichtung (27), die dem Airbag (25) Gas zuführt, ein Basisgehäuse (24), das einen Basisteil (24a)besitzt, das den Airbag (25) und die Aufblasvorrichtung (27) aufnimmt, wobei das Basisteil (24a) an einem Befestigungsglied angebracht ist, und wobei das Basisgehäuse (24) ferner einen Umfangswandabschnitt (24b) besitzt, der mindestens teilweise eine geschlossene Form besitzt und
entlang eines Außenumfangs des Basisteiles (24a) in Richtung auf einen vorderen Abschnitt zu hervorragt;
ein Abdeckungsgehäuse (26), das einen Deckelteil (26a) besitzt, der die Vorderseite des Umfangswandabschnittes (24b) des Basisgehäuses (24) abdeckt und eine Seitenwand (26b) besitzt, die von einer Rückseite des Deckelteils (26a) entlang des Umfangswandabschnittes (24b) des Basisgehäuses (24) nach unten herausragt;
eine Schalteinrichtung (22), die an der äußeren Umfangsseite der Seitenwand (26b) des Abdeckungsgehäuses (26) angeordnet ist, wobei die Schalteinrichtung (22) ein Druckmittel (38) zum Drücken des Abdeckungsgehäuses (26) in Richtung auf die Vorderseite zu umfasst, sowie einen ersten Kontakt (36e), der auf der Rückseite des Deckelteils (26a) abgestützt wird, einen zweiten Kontakt (31d), der dem ersten Kontakt (36e) gegenüberliegt und durch das Basisgehäuse (24) oder das Befestigungsglied abgestützt wird,
**dadurch gekennzeichnet, dass** ein Eingriffsteil (24h) an einer der Umgebungswände (24b) des Basisgehäuses (24) und der Seitenwand (26b) des Abdeckungsgehäuses (26) vorgesehen ist, und wobei ein Verriegelungsaufnahmeteil (26h), das in Eingriff mit dem Eingriffsteil (24h) steht und dieses beweglich innerhalb eines vorbestimmten Bereiches in Rückund Vorwärtsrichtungen hält, auf der anderen Umgebungswand (24b) des Basisgehäuses (24) und der Seitenwand (26b) des Abdeckungsgehäuses (26) vorgesehen ist, und dass das Verriegelungsaufnahmeteil (26h) den Eingriffsteil (24h) frei in so einer Richtung führt, während die Kontakte (36e,31d) in Kontakt miteinander gelangen und sich voneinander lösen in einem Bewegungsbereich, der durch einen Betrieb der Schalteinrichtung (22) hervorgerufen wird.

2. Airbaggerät nach Anspruch 1, bei dem die Seitenwand (26b) des Abdeckungsgehäuses (26) eine mindestens teilweise geschlossene Form besitzt.

3. Airbaggerät nach Anspruch 1 oder Anspruch 2, bei dem die Höhe der umgebenden Wand (24b) des Basisgehäuses (24) im wesentlichen der Höhe eines Airbaggehäuseteils (21) gleicht, dass den Airbag (25) umhüllt.

4. Airbaggerät nach irgendeinem vorstehenden Anspruch, ferner umfassend:
ein Umhüllungsmittel (28), das mindestens einen Teil der Vorderseite des Airbags (25) umhüllt, das das Airbaggehäuseteil (21) umgibt.

5. Airbaggerät nach irgendeinem vorstehenden Anspruch, bei dem die umgebende Wand (24b) des Basisgehäuses (24) integral mit dem Basisteil (24a) ausgebildet ist.

6. Airbaggerät nach Anspruch 5, bei dem das Basisgehäuse (24) durch Ausbilden des Basisteils (24a) hergestellt wird, und wobei die umgebende Wand (24b) so geformt ist, dass sie in einer geschlossenen oder im wesentlichen geschlossenen Form an der Vorderseite herausragt, die den Basisteil (24a) und den Stützteil umgibt, der am äußeren Umfangsabschnitt der umgebenden Wand (24b) vorgesehen ist und der rückwärtigen Fläche des Deckelteils (26a) gegenüberliegt und den zweiten Kontakt (31d) insgesamt in einem einzigen Gehäuse unter Verwendung einer Form abstützt.

7. Airbaggerät nach irgendeinem vorstehenden Anspruch, bei dem die Schaltungseinrichtung (22) eine Halterung (35) besitzt, die den ersten Kontakt (36e) hält und mindestens die äußere Umfangsseite der Seitenwand (26b) des Abdeckungsgehäuses (26) abstützt.

8. Airbaggerät nach irgendeinem der vorstehenden Ansprüche in Kombination mit einem Lenkrad für ein Kraftfahrzeug, umfassend:
eine Lochplatte (6), die in einer Lenkwelle gelagert ist, eine Rand (5), und
eine Speiche (7), die die Lochplatte (6) mit dem Rand (5) verbindet.

## Revendications

1. Dispositif d'airbag comprenant :
un airbag (25) ;
un gonfleur (27) amenant un gaz vers ledit airbag (25) ;
un corps de base (24) ayant une partie de base (24a), ladite partie de base (24a) servant à fixer ledit airbag (25) et ledit gonfleur (27), ladite partie de base (24a) étant reliée à un élément de fixation, le corps de base (24) ayant en outre une partie de paroi périphérique (24b) ayant au moins en partie une forme fermée et dépassant le long d'une périphérie de la partie de base (24a) en direction d'une partie avant ;
un corps de protection (26) ayant une partie de couvercle (26a) recouvrant une face avant de la partie de paroi périphérique (24b) du corps de base (24) et ayant une paroi latérale (26b) dépassant vers le bas depuis une face arrière de ladite partie de couvercle (26a), le long de ladite partie de paroi périphérique (24b) dudit corps de base (24) ;
un dispositif de commutation (22) situé sur la face périphérique extérieure de ladite paroi latérale (26b) dudit corps de protection (26), le dispositif de commutation (22) comprenant des moyens d'avancement (38) pour faire avancer ledit corps de protection (26) en direction de la face avant, un premier contact (36e) supporté sur la face arrière de ladite partie de couvercle (26a), un deuxième contact (31d) faisant face au premier contact (36e) et étant supporté par un dudit corps de base (24) ou ledit élément de fixation,
**caractérisé en ce qu'**il est prévu une partie d'engagement (24h) sur une paroi d'enceinte (24b) du corps de base (24) et la paroi latérale (26b) du corps de protection (26) et une partie recevant une serrure (26h) entrant en prise avec la partie de mise en prise (24h) et la maintenant de manière mobile dans une fourchette prédéterminée, dans les directions arrière et avant, sur l'autre paroi d'enceinte (24b) du corps de base (24) et la paroi latérale (26b) du corps de protection (26) et **en ce que**
la partie recevant la serrure (26h) guide librement la partie de mise en prise (24h) dans une direction telle que les contacts (36e, 31d) entrent en contact entre eux dans une fourchette de mouvement provoquée par un déplacement du dispositif de commutation (22).

2. Dispositif d'airbag selon la revendication 1, dans lequel ladite paroi latérale (26b) dudit corps de protection (26) a au moins une forme partiellement fermée.

3. Dispositif d'airbag selon la revendication 1 ou 2, dans lequel la hauteur de la paroi d'enceinte (24b) du corps de base (24) est sensiblement égale à la hauteur d'une partie de logement d'airbag (21) contenant l'airbag (25).

4. Dispositif d'airbag selon l'une quelconque des revendications précédentes, comprenant en outre des moyens enveloppants (28) enveloppant au moins une partie de la face avant de l'airbag (25) contenue dans la partie de logement d'airbag (21).

5. Dispositif d'airbag selon l'une quelconque des revendications précédentes, dans lequel la paroi d'enceinte (24b) du corps de base (24) est formée intégralement par la partie de base (24a).

6. Dispositif d'airbag selon la revendication 5, dans lequel le corps de base (24) est fabriqué par formation de la partie de base (24a), la paroi d'enceinte (24b) étant formée pour dépasser dans une forme fermée ou sensiblement fermée sur la face avant entourant la partie de base (24a) et la partie de support qui est prévue sur la partie périphérique extérieure de la paroi d'enceinte (24b) pour faire face à la face arrière de la partie de couvercle (26a) et supporter le deuxième contact (31d), dans un corps unique utilisant une matrice.

7. Dispositif d'airbag selon l'une quelconque des revendications précédentes, dans lequel le dispositif de commutation (22) a une patte de fixation (35) qui maintient le premier contact (36e) et supporte au moins la face périphérique extérieure de la paroi latérale (26b) du corps de protection (26).

8. Dispositif d'airbag selon l'une quelconque des revendications précédentes combiné à un volant d'automobile, comprenant :
un bossage (6) qui est supporté sur l'arbre de direction ;
une jante (5) et
un rayon (7) qui relie le bossage (6) et la jante (5).
